# EUROPEAN PATENT SPECIFICATION

(11) **EP 2 833 074 B1**
(45) Date of publication and mention of the grant of the patent: **19.04.2017**
(21) Application number: 12872707.0
(22) Date of filing: 29.03.2012
(51) Int. Cl.: F24F 1/32, F24F 1/20, F24F 11/02, F24F 13/20, F25B 41/00, F24F 1/22, F25B 13/00, F25B 40/02

(54) **BRANCH CONTROLLER AND AIR-CONDITIONING DEVICE PROVIDED THEREWITH**
VERZWEIGUNGSSTEUERUNG UND KLIMATISIERUNGSVORRICHTUNG DAMIT
DISPOSITIF DE COMMANDE DE BRANCHE ET DISPOSITIF DE CONDITIONNEMENT D'AIR COMPORTANT CELUI-CI

(43) Date of publication of application: 04.02.2015
(73) Proprietor: Mitsubishi Electric Corporation, Tokyo 100-8310 (JP)
(72) Inventor: TAMURA, Naomichi, Tokyo 100-8310 (JP); MORIMOTO, Hiroyuki, Tokyo 100-8310 (JP)
(74) Representative: Pfenning, Meinig & Partner mbB
(86) International application number: PCT/JP2012/002201
(87) International publication number: WO 2013/145013

(56) References cited:
- EP-A1- 1 876 398
- EP-A2- 0 862 023
- EP-A2- 2 402 668
- WO-A1-2012/029099
- JP-A- H05 322 206
- JP-A- H06 109 315
- JP-A- H09 250 776
- JP-A- H09 273 799
- JP-A- H11 237 103
- JP-A- 2001 041 635
- JP-A- 2002 267 353
- JP-A- 2004 309 088
- JP-A- 2007 198 702
- JP-A- 2007 198 703
- JP-A- 2008 057 870
- JP-A- 2010 144 976
- JP-A- 2010 265 472
- JP-A- 2012 013 275
- JP-A- 2012 013 348
- JP-U- 3 072 760
- JP-U- S6 021 639
- SHO FUKUDA ET AL.: 'R1234ze(E)/R32 Kongo Reibai no Heat Pump Cycle Seino Hyoka' 2011 NENDO JAPAN SOCIETY OF RIFRIGERATING AND AIR CONDITIONING ENGINEERS NENJI TAIKAI KOEN RONBUNSHU, JAPAN SOCIETY OF RIFRIGERATING AND AIR CONDITIONING ENGINEERS 0285-6867 13 September 2011, XP008174684

## Description

### Technical Field

The present invention relates to a distribution controller included in, for example, a multi-air-conditioning apparatus for a building and an air-conditioning apparatus including the distribution controller.

### Background Art

In a related-art air-conditioning apparatus, such as a multi-air-conditioning apparatus for a building, a refrigerant is circulated between an outdoor unit, serving as a heat source unit, disposed outside, for example, a structure, indoor units arranged in indoor spaces of the structure, and a distribution controller that connects the outdoor unit and the indoor units. In such an air-conditioning apparatus, each of switching valves arranged in the distribution controller is switched between an open state and a closed state to supply the refrigerant to the corresponding indoor unit performing a heating operation or a cooling operation.

The distribution controller in the air-conditioning apparatus is provided with many electric components, such as an expansion device, in addition to the switching valves. In addition, a circuit board for operating the electric components is disposed in the distribution controller such that the circuit board is received in an electric component box. The electric component box has a slit or hole in its upper surface or lower surface, or alternatively is provided with a large heat sink. Such a structure allows a current of air to pass through the electric components box in order to suppress an increase in temperature inside the electric component box caused by the electric components.

In recent years, there has been a tendency to limit the use of HFC refrigerants having higher global warming potentials (for example, R410A, R404A, R407C, and R134a) from the viewpoint of global warming. Air-conditioning apparatuses using a refrigerant having a lower global warming potential (for example, R32, HFO1234yf, HFO1234ze(E), or a mixture of these refrigerants) have been developed in accordance with this tendency. Disadvantageously, all of these refrigerants having lower global warming potentials are flammable. In case of leakage, such a refrigerant may intrude into the electric component box.

For provision against such an accident, a technique to allow an electric component to include a noncontact switch and a technique to provide an electric component box with a film that permits only a gas to pass therethrough are disclosed (refer to Patent Literature 1, for example).

### Citation List

### Patent Literature

Patent Literature 1: Japanese Unexamined Patent Application Publication No. 6-101913 ([0030] to [0033] and [0045], for example)

### Summary of Invention

### Technical Problem

The use of the noncontact switch or the film that permits only a gas to pass therethrough, as in the techniques disclosed in Patent Literature 1, leads to a significant increase in cost. Furthermore, it is difficult to achieve long-term reliability because the film significantly deteriorates with time. It is therefore necessary to replace the film at regular time intervals. Such a system requires a high maintenance cost and much time and effort.

The present invention has been made to solve the above-described disadvantages and provides a distribution controller with significantly increased safety achieved while suppressing an increase in cost and an air-conditioning apparatus including the distribution controller.

### Solution to Problem

The present invention provides a distribution controller included in an air-conditioning apparatus that uses a flammable refrigerant, the distribution controller including a housing, a switching valve disposed inside the housing and configured to switch between a refrigerant passing state and a refrigerant blocking state, a control unit configured to control at least the switching valve, and an electric component box attached to the housing and configured to accommodate at least the control unit and an electric component used to control a driving component included in the air-conditioning apparatus. The housing has a communicating portion that communicates between the housing and the electric component box. The communicating portion is disposed at a level lower than 1/3 of the height of the housing from a bottom surface of the housing. A bottom surface of the control unit and a bottom surface of the electric component are arranged at a level higher than 1/3 of the height of the electric component box from a bottom surface of the electric component box.

### Advantageous Effects of Invention

In the distribution controller included in the air-conditioning apparatus according to the present invention, an installation position of the electric component box and installation positions of the control unit and a relay accommodated in the electric component box are specified. Accordingly, if the flammable refrigerant leaks, intrusion of the leaked refrigerant into the electric component box can be significantly reduced. In addition, even if the leaked refrigerant intrudes into the electric component box, the control unit and the relay will not be exposed to the refrigerant. Advantageously, a distribution controller of the air-conditioning apparatus according to the present invention significantly improves safety while suppressing an increase in cost.

### Brief Description of Drawings

[Fig. 1] Fig. 1 is a schematic circuit diagram illustrating an exemplary circuit configuration of an air-conditioning apparatus according to Embodiment of the present invention.
[Fig. 2] Fig. 2 is a refrigerant circuit diagram illustrating a flow of a refrigerant in a cooling operation mode of the air-conditioning apparatus according to Embodiment of the present invention.
[Fig. 3] Fig. 3 is a refrigerant circuit diagram illustrating a flow of the refrigerant in a heating operation mode of the air-conditioning apparatus according to Embodiment of the present invention.
[Fig. 4] Fig. 4 is a circuit diagram schematically illustrating an electrical connection state in the air-conditioning apparatus according to Embodiment of the present invention.
[Fig. 5] Fig. 5 includes schematic perspective views each illustrating an appearance of a distribution controller according to Embodiment of the present invention.
[Fig. 6] Fig. 6 is a side view illustrating a side surface of the distribution controller illustrated in Fig. 5 on which an electric component box is disposed.
[Fig. 7] Fig. 7 is a cross-sectional view of the distribution controller taken along line B-C in Fig. 5(a).
[Fig. 8] Fig. 8 is a schematic diagram schematically illustrating arrangement of electric components in the electric component box, the electric components being arranged in the distribution controller according to Embodiment of the present invention.
[Fig. 9] Fig. 9 includes schematic diagrams schematically illustrating an exemplary placement of a wide band gap semiconductor, included in at least one of elements included in a control unit disposed in the distribution controller according to Embodiment of the present invention.

### Description of Embodiment

Embodiment of the present invention will be described below with reference to the drawings.

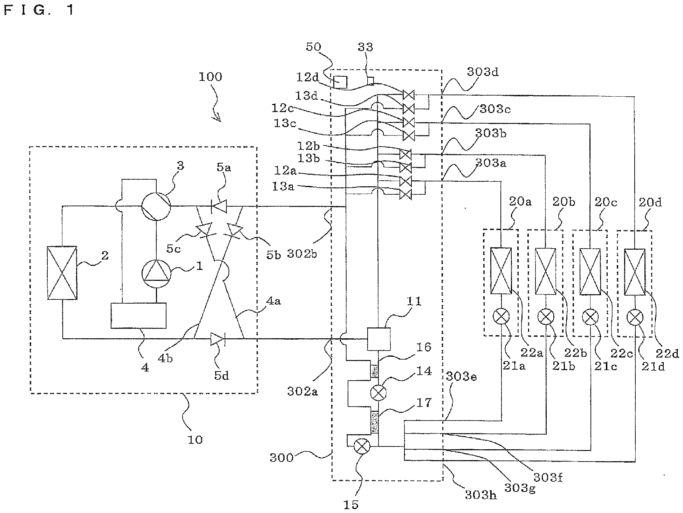

Fig. 1 is a schematic circuit diagram illustrating an exemplary circuit configuration of an air-conditioning apparatus 100 according to Embodiment of the present invention. The circuit configuration of the air-conditioning apparatus 100 will be described in detail with reference to Fig. 1. Fig. 1 illustrates an exemplary arrangement of four indoor units 20 connected. Note that the dimensional relationship among components in Fig. 1 and subsequent figures may be different from the actual one. Furthermore, note that components designated by the same reference numerals in Fig. 1 and the subsequent figures are the same components or equivalents. The above notes are intended to be common throughout this specification. Furthermore, note that the forms of components described in the specification are intended to be illustrative only and are not intended to be limited to the descriptions.

As illustrated in Fig. 1, the air-conditioning apparatus 100 includes an outdoor unit (heat source unit) 10, the indoor units 20 (indoor units 20a to 20d), and a distribution controller 300 connecting the outdoor unit 10 and the indoor units 20 such that these components are connected by pipes to establish communication between them. In other words, a plurality of indoor units 20 are connected in parallel with the outdoor unit 10 and the distribution controller 300 in the air-conditioning apparatus 100.

A refrigerant, such as R32, HFO1234yf, HFO1234ze(E), a mixture of R32 and HFO1234yf, or a mixture of R32 and HFO1234ze(E), is enclosed in the air-conditioning apparatus 100. HFO1234yf has two geometric isomers, a "trans" form in which F and CF₃ appear on opposite sides of the double bond and a "cis" form in which F and CF₃ appear on the same side of the double bond. Embodiment uses trans-HFO1234ze(E), which is a "trans" form, or trans-1,3,3,3-tetrafluoro-1-propene in IUPAC Nomenclature.

### [Outdoor Unit 10]

The outdoor unit 10 has a function for providing heating or cooling to the indoor units 20. The outdoor unit 10 is provided with a compressor 1, a flow switching device 3, such as a four-way valve, a heat source side heat exchanger 2, an accumulator 4, check valves 5a to 5d, and refrigerant pipes 4a and 4b connected by pipes.

The compressor 1 is configured to suck the refrigerant, compress the refrigerant into a high-temperature high-pressure state, and send the resultant refrigerant to a refrigerant circuit, and may be a capacity-controllable inverter compressor, for example.

The flow switching device 3 is connected to a refrigerant discharge side of the compressor 1 and is configured to switch between a flow direction of the refrigerant in a heating operation mode and that in a cooling operation mode.

The heat source side heat exchanger (outdoor side heat exchanger) 2 is configured to function as an evaporator during a heating operation, function as a radiator (or condenser) during a cooling operation, and exchange heat between the refrigerant and air supplied by an outdoor air-sending device (not illustrated), such as a fan.

The accumulator 4 is disposed on a suction side of the compressor 1 and is configured to store an excess of refrigerant caused by the difference between the heating operation mode and the cooling operation mode or an excess of refrigerant caused by a transient change in operation (for example, a change in number of operating indoor units 20).

The check valves 5a to 5d and the refrigerant pipes 4a and 4b are configured to allow the refrigerant to flow into the distribution controller 300 in a given direction irrespective of an operation requested by any indoor unit 20. Although the air-conditioning apparatus 100 illustrated in Fig. 1 includes the check valves 5a to 5d and the refrigerant pipes 4a and 4b, the configuration is not limited to this illustration. In other words, the air-conditioning apparatus 100 does not necessarily have to include the check valves 5a to 5d and the refrigerant pipes 4a and 4b.

### [Indoor Units 20]

The indoor units 20 have a function for heating or cooling an air-conditioned space, such as an indoor space, with the refrigerant supplied from the outdoor unit 10. Each of the indoor units 20 is provided with at least a use side heat exchanger (indoor side heat exchanger) 22 and an expansion device 21 such that these components are connected in series.

Specifically, the expansion device 21 and the use side heat exchanger 22 are connected in series in that order in a direction from a side of the indoor unit 20 connected to an expansion device 15 to a side thereof connected to switching valves 12 and 13, which will be described later. The indoor unit 20 further includes an indoor air-sending device (not illustrated) to supply air taken in the indoor unit 20 to the use side heat exchanger 22.

The use side heat exchanger 22 is configured to function as a radiator (or condenser) during the heating operation, function as an evaporator during the cooling operation, and exchange heat between the refrigerant and air supplied from the indoor air-sending device (not illustrated), such as a fan, in order to generate heating air or cooling air to be supplied to the air-conditioned space.

The expansion device 21 has functions of a pressure reducing valve and an expansion valve and is configured to decompress the refrigerant in order to expand the refrigerant. The expansion device 21 may be a component having a variably controllable opening degree, for example, an electronic expansion valve.

In Embodiment, the exemplary arrangement of four indoor units 20 connected is illustrated. The indoor units 20a, 20b, 20c, and 20d are illustrated in that order from the left (or bottom) of the drawing sheet. In addition, the use side heat exchangers 22 are illustrated as use side heat exchangers 22a, 22b, 22c, and 22d in that order from the left (or bottom) of the drawing sheet so as to correspond to the indoor units 20a to 20d, respectively. Similarly, the expansion devices 21 are illustrated as expansion devices 21 a, 21 b, 21 c, and 21 d in that order from the left (or bottom) of the drawing sheet. Note that the number of indoor units 20 connected is not limited to four.

### [Distribution Controller 300]

The distribution controller 300 is disposed between the outdoor unit 10 and the indoor units 20. The distribution controller 300 includes the switching valves 12 (12a to 12d) and 13 (13a to 13d), each of which is opened or closed depending on the heating operation mode or the cooling operation mode, subcooling heat exchangers 16 and 17 to increase the degree of subcooling during cooling in order to increase performance, an expansion device 14, the expansion device 15, relays 33 to switch, for example, the switching valves 12 and 13 between the open state and the closed state (ON/OF), a control unit 50 to control, for example, energization of the relays 33 and a driving frequency of the compressor 1, pipe connection ports 303 (303a to 303h) to connect the indoor units 20 to the distribution controller 300, and pipe connection ports 302 (302a, 302b) to connect the outdoor unit 10 to the distribution controller 300.

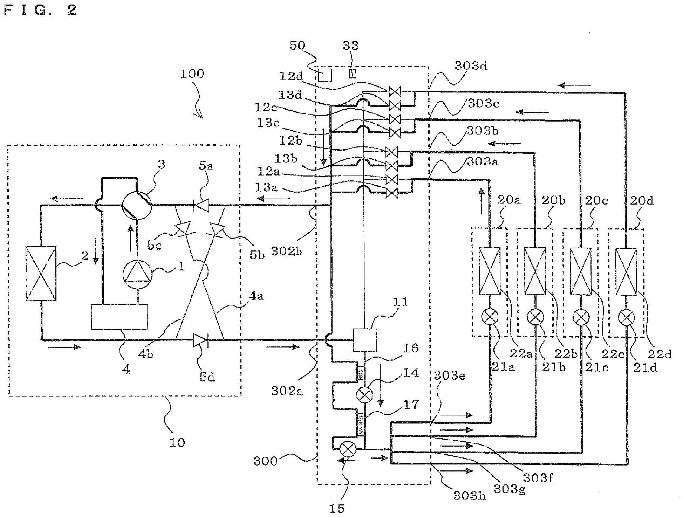

Each switching valve 12 is configured to open and close a refrigerant passage and is a solenoid valve, for example. The switching valve 12 is switched between the open state and the closed state by switching current supply to the relay 33 through the control unit 50. For example, the switching valves 12 are controlled such that the switching valves 12a to 12d are opened in the cooling operation mode in which all of the indoor units 20a to 20d perform the cooling operation (refer to Fig. 2). If any of the indoor units 20a to 20d does not perform the cooling operation, the corresponding switching valve 12 is controlled so as to be closed. On the other hand, the switching valves 12 are controlled so as to be closed in the heating operation mode.

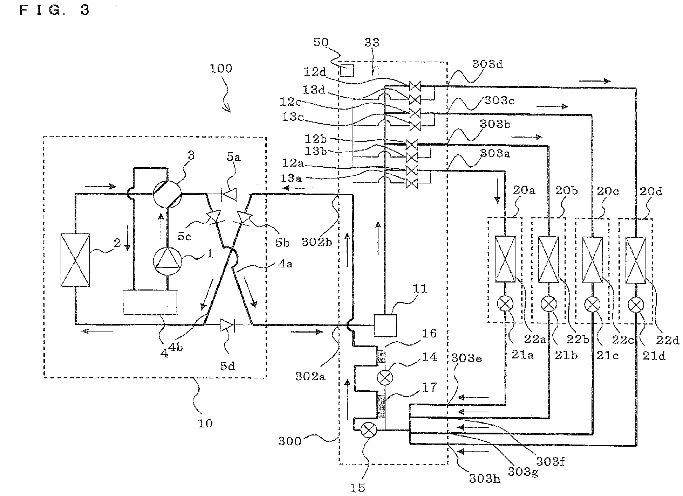

Like the switching valve 12, each switching valve 13 is configured to open and close a refrigerant passage and is a solenoid valve, for example. The switching valve 13 is switched between the open state and the closed state by switching current supply to the relay 33 through the control unit 50. For example, the switching valves 13 are controlled such that the switching valves 13a to 13d are opened in the heating operation mode in which all of the indoor units 20a to 20d perform the heating operation (refer to Fig. 3). If any of the indoor units 20a to 20d does not perform the heating operation, the corresponding one of the switching valves 13a to 13d is controlled so as to be closed. On the other hand, the switching valves 13a to 13d are controlled so as to be closed in the cooling operation mode.

The subcooling heat exchanger 16 is a heat exchanger to increase the degree of subcooling during cooling in order to increase the performance. A first passage of the subcooling heat exchanger 16 is connected between a gas-liquid separator 11 and a first end of the expansion device 14 and a second passage thereof through which the refrigerant exchanging heat with the refrigerant flowing through the first passage flows is connected to a passage through which the refrigerant flowing out of the expansion device 15 flows. Thus, the subcooling heat exchanger 16 allows a two-phase gas-liquid refrigerant flowing out of the gas-liquid separator 11 to be cooled by a two-phase gas-liquid refrigerant having flowed out of the expansion device 15, so that the temperature of the refrigerant can be reduced.

Like the subcooling heat exchanger 16, the subcooling heat exchanger 17 is a heat exchanger to increase the degree of subcooling during cooling in order to increase the performance. A first passage of the subcooling heat exchanger 17 is connected to a second end of the expansion device 14 and a second passage thereof through which the refrigerant exchanging heat with the refrigerant flowing through the first passage flows is connected to the passage through which the refrigerant flowing out of the expansion device 15 flows. Thus, the subcooling heat exchanger 17 allows the two-phase gas-liquid refrigerant flowing out of the subcooling heat exchanger 16 to be further reduced in temperature by the two-phase gas-liquid refrigerant flowing out of the expansion device 15.

The expansion device 14 is configured to decompress the refrigerant flowing out of the subcooling heat exchanger 16 and control the flow rate of the refrigerant flowing into the subcooling heat exchangers 16 and 17. The expansion device 14 is connected at the first end to the subcooling heat exchanger 16 and is connected at the second end to the subcooling heat exchanger 17. The opening degree of the expansion device 14 is controlled by the control unit 50 such that the expansion device 14 is fully opened in the cooling operation mode so as not to decompress the refrigerant. Furthermore, the expansion device 14 is controlled so as to be closed in the heating operation mode. The expansion device 14 may be a component having a variably controllable opening degree, for example, an electronic expansion valve.

The expansion device 15 is configured to decompress the refrigerant flowing out of the subcooling heat exchanger 17 and control the flow rate of the refrigerant flowing into the subcooling heat exchangers 16 and 17. The expansion device 15 is connected at a first end to a refrigerant outlet side of the subcooling heat exchanger 17 in the cooling operation mode and is connected at a second end to a refrigerant inlet side of the subcooling heat exchanger 17 in the cooling operation mode. The opening degree of the expansion device 15 is controlled by the control unit 50 such that the expansion device 15 has a predetermined opening degree in the cooling operation mode. Furthermore, the expansion device 15 is controlled so as to be opened in the heating operation mode. The expansion device 15 may be a component having a variably controllable opening degree, for example, an electronic expansion valve.

The relays 33 (relays 33a to 33d) are used to control opening and closing (ON/OFF) of the switching valves 12 and 13 and opening and closing of a solenoid valve (not illustrated). The relays 33 are accommodated in an electric component box 30, which will be described later.

The control unit 50 is disposed in the distribution controller 300 and is configured to control various components of the outdoor unit 10, those of the indoor units 20, and those of the distribution controller 300. The control unit 50 is configured to perform centralized control on the entire air-conditioning apparatus 100, serving as a system, on the basis of detection information from various detecting devices (not illustrated), an instruction from a remote control, and the like. Specifically, the control unit 50 controls the driving frequency of the compressor 1, switching of the flow switching device 3, the opening degree of each of the expansion devices 14, 15, and 21, a rotation speed of each of the outdoor and indoor air-sending devices (not illustrated in Fig. 1), opening and closing of the switching valves 12 and 13, and energization of the relays 33. In other words, the control unit 50 controls various actuators (driving components, for example, the compressor 1, the flow switching device 3, the expansion devices 14, 15, and 21, the outdoor and indoor air-sending devices, the switching valves 12 and 13, and the relays 33).

The pipe connection ports 303a to 303d are configured to connect the refrigerant pipes connected to the switching valves 12a to 12d and 13a to 13d in the distribution controller 300 to the refrigerant pipes connected to the use side heat exchangers 22 in the indoor units 20.

The pipe connection ports 303e to 303h are configured to connect the refrigerant pipes connected to the expansion device 15 and the subcooling heat exchanger 17 in the distribution controller 300 to the refrigerant pipes connected to the expansion devices 21 in the indoor units 20.

The pipe connection ports 302a and 302b are configured to connect the refrigerant pipes connected to the switching valves 13a to 13d and the subcooling heat exchanger 16 in the distribution controller 300 to the refrigerant pipes connected to the check valves 5a and 5b in the outdoor unit 10.

The operation modes executed by the air-conditioning apparatus 100 will be described.

### [Cooling Operation Mode]

Fig. 2 is a refrigerant circuit diagram illustrating a flow of the refrigerant in the cooling operation mode of the air-conditioning apparatus 100. Fig. 2 illustrates a case where all of the indoor units 20 are operating. In the cooling operation mode, the flow switching device 3 is switched such that the heat source side heat exchanger 2 functions as a radiator and each use side heat exchanger 22 functions as an evaporator. Specifically, the flow switching device 3 is switched such that the refrigerant discharged from the compressor 1 flows into the heat source side heat exchanger 2. In Fig. 2, the flow direction of the refrigerant is indicated by arrows.

A low-temperature low-pressure refrigerant is compressed into a high-temperature high-pressure gas refrigerant by the compressor 1 and the resultant refrigerant is discharged therefrom. The high-temperature high-pressure gas refrigerant discharged from the compressor 1 passes through the flow switching device 3 and flows into the heat source side heat exchanger 2. The high-temperature high-pressure gas refrigerant, which has flowed into the heat source side heat exchanger 2, exchanges heat with air supplied from the air-sending device (not illustrated) and thus turns into a liquid state or a two-phase refrigerant with low quality. The resultant refrigerant flows out of the heat source side heat exchanger 2 and then flows into the distribution controller 300.

The refrigerant, which has flowed into the distribution controller 300, flows into the gas-liquid separator 11. In the cooling operation mode, the refrigerant flowing into the distribution controller 300 has low quality. Accordingly, the refrigerant which has flowed into the distribution controller 300 is divided into a first flow and a second flow such that the first flow of refrigerant flows through the subcooling heat exchanger 16, the expansion device 14, and the subcooling heat exchanger 17 to the expansion device 15 and the second flow of refrigerant flows through the subcooling heat exchanger 16, the expansion device 14, and the subcooling heat exchanger 17 to the indoor units 20a to 20d.

For the first flow to the expansion device 15, the refrigerant is decompressed by the expansion device 15, so that the refrigerant turns into a low-pressure two-phase gas-liquid refrigerant. The resultant refrigerant flows into the subcooling heat exchanger 17 and the subcooling heat exchanger 16. Consequently, the refrigerant exchanges heat with the high-pressure refrigerant flowing through the subcooling heat exchangers 17 and 16, so that the refrigerant turns into a low-pressure gas refrigerant. The resultant refrigerant merges with the refrigerant which has passed through the switching valves 13a to 13d.

For the second flow to the indoor units 20a to 20d, the refrigerant is cooled by the two-phase gas-liquid refrigerant having flowed out of the expansion device 15 while flowing through the subcooling heat exchangers 16 and 17, so that the temperature of the refrigerant falls. In other words, the refrigerant of the second flow to the indoor units 20a to 20d flows through the subcooling heat exchangers 16 and 17, so that the degree of subcooling is increased. In the cooling operation mode, the expansion device 14 is fully opened so as not to decompress the refrigerant.

The refrigerant, having flowed out of the distribution controller 300, in a liquid state passes through the pipes connecting the distribution controller 300 and the indoor units 20a to 20d and flows into the indoor units 20a to 20d. The refrigerant, which has flowed into the indoor units 20a to 20d, is expanded (or decompressed) by the expansion devices 21 a to 21 d, so that the refrigerant turns into a low-temperature, low-pressure two-phase gas-liquid state. This refrigerant in the two-phase gas-liquid state flows into the use side heat exchangers 22a to 22d. The two-phase gas-liquid refrigerant, which has flowed into the use side heat exchangers 22a to 22d, exchanges heat with air (indoor air) supplied from the air-sending devices (not illustrated) to remove heat from the air, so that the refrigerant turns into a low-pressure gas refrigerant. The resultant refrigerant flows out of the use side heat exchangers 22a to 22d.

Although not illustrated, a temperature sensor is typically disposed on each of a refrigerant inlet and a refrigerant outlet of each use side heat exchanger 22. The amount of refrigerant supplied to the use side heat exchanger 22 is controlled on the basis of temperature information from the temperature sensors arranged at the refrigerant inlet and the refrigerant outlet of the use side heat exchanger 22. Specifically, the control unit 50 calculates the degree of superheat (the temperature of the refrigerant at the outlet - the temperature of the refrigerant at the inlet) on the basis of the information from the temperature sensors and determines the opening degree of the corresponding expansion device 21 so that the degree of superheat ranges from approximately 2 degrees C to approximately 5 degrees C, thus controlling the amount of refrigerant supplied to the use side heat exchanger 22.

The low-pressure gas refrigerant having flowed out of the use side heat exchangers 22a to 22d flows out of the indoor units 20a to 20d, respectively, and then flows into the distribution controller 300. In the cooling operation mode, the switching valves 12a to 12d are closed and the switching valves 13a to 13d are opened in the distribution controller 300. The low-pressure gas refrigerant, which has flowed into the distribution controller 300, passes through the switching valves 13a to 13d and then merges with the refrigerant having flowed out of the subcooling heat exchanger 16. The resultant refrigerant flows out of the distribution controller 300. The refrigerant having flowed out of the distribution controller 300 flows through the pipe connecting the distribution controller 300 and the outdoor unit 10 into the outdoor unit 10. The refrigerant, which has flowed into the outdoor unit 10, flows through the check valve 5a and the flow switching device 3 into the accumulator 4. The refrigerant, which has flowed into the accumulator 4, is separated into a liquid refrigerant and a gas refrigerant. The gas refrigerant is again sucked into the compressor 1.

Since the degree of superheat is controlled in the indoor units 20 in the cooling operation mode, the liquid refrigerant does not flow into the accumulator 4. If it is in a transient state, or if any of the indoor units 20 is suspended, however, a small amount of liquid refrigerant (with a quality of approximately 0.95) may flow into the accumulator 4. The liquid refrigerant, which has flowed into the accumulator 4, evaporates and is sucked into the compressor 1, or alternatively is sucked into the compressor 1 through an oil return port (not illustrated) disposed in an outlet pipe of the accumulator 4.

### [Heating Operation Mode]

Fig. 3 is a refrigerant circuit diagram illustrating a flow of the refrigerant in the heating operation mode of the air-conditioning apparatus 100. Fig. 3 illustrates a case where all of the indoor units 20 are operating. In the heating operation mode, the flow switching device 3 is switched such that the heat source side heat exchanger 2 functions as an evaporator and each use side heat exchanger 22 functions as a radiator. Specifically, the flow switching device 3 is switched such that the refrigerant discharged from the compressor 1 flows into the use side heat exchangers 22. In Fig. 3, the flow direction of the refrigerant is indicated by arrows.

A low-temperature low-pressure refrigerant is compressed into a high-temperature high-pressure gas refrigerant by the compressor 1 and is discharged therefrom. The high-temperature high-pressure gas refrigerant discharged from the compressor 1 passes through the flow switching device 3 and the check valve 5c and flows out of the outdoor unit 10. The refrigerant, which has flowed out of the outdoor unit 10, flows through the pipe connecting the outdoor unit 10 and the distribution controller 300 into the distribution controller 300.

The gas refrigerant, which has flowed into the distribution controller 300, flows into the gas-liquid separator 11 in the distribution controller 300. Since the whole refrigerant flowing into the gas-liquid separator 11 is a gas refrigerant in the heating operation mode, the refrigerant flowing out of the gas-liquid separator 11 flows to the switching valves 12a to 12d. In the heating operation mode, the switching valves 13a to 13d are closed.

The gas refrigerant, which has flowed into the switching valves 12a to 12d, flows out of the distribution controller 300, passes through the pipes connecting the distribution controller 300 and the indoor units 20a to 20d, and flows into the indoor units 20a to 20d.

The high-temperature high-pressure gas refrigerant, which has flowed into the indoor units 20a to 20d, exchanges heat with air (indoor air) supplied from the air-sending devices (not illustrated) to transfer heat to the air in the use side heat exchangers 22a to 22d, so that the refrigerant turns into a liquid state. The liquid refrigerant flows out of the use side heat exchangers 22a to 22d. The high-pressure liquid refrigerant is expanded (decompressed) into a low-temperature, low-pressure two-phase gas-liquid state by the expansion devices 21 a to 21 d. The resultant refrigerant flows out of the indoor units 20a to 20d.

Although not illustrated, the temperature sensor and a pressure sensor are typically arranged at the refrigerant outlet of each use side heat exchanger 22. The amount of refrigerant supplied to the use side heat exchanger 22 is controlled on the basis of information from the temperature sensor and the pressure sensor arranged at the refrigerant outlet of the use side heat exchanger 22. Specifically, the control unit 50 calculates the degree of subcooling (a saturation temperature converted from a detected pressure of the refrigerant at the outlet - the temperature of the refrigerant at the outlet) on the basis of the information from the sensors and determines the opening degree of the corresponding expansion device 21 so that the degree of subcooling ranges from approximately 2 degrees C to approximately 5 degrees C, thus controlling the amount of refrigerant supplied to the use side heat exchanger 22.

The low-temperature, low-pressure two-phase gas-liquid refrigerant having flowed out of the indoor units 20a to 20d passes through the pipes connecting the indoor units 20a to 20d and the distribution controller 300 and flows into the distribution controller 300. The two-phase gas-liquid refrigerant, which has flowed into the distribution controller 300, passes through the expansion device 15 and the subcooling heat exchangers 17 and 16 and then flows out of the distribution controller 300. The refrigerant, which has flowed out of the distribution controller 300, flows through the pipe connecting the distribution controller 300 and the outdoor unit 10 into the outdoor unit 10. The expansion device 14 is closed in the heating operation mode.

In this case, the expansion device 15 is fully opened. Although the regulation of the pressure of the refrigerant by the expansion devices 21 a to 21 d in the heating operation mode has been described above, the pressure may be regulated by the expansion device 15 or may be regulated by the expansion device 15 and the expansion devices 21 a to 21 d.

The two-phase gas-liquid refrigerant, which has flowed into the outdoor unit 10, passes through the check valve 5b and then flows into the heat source side heat exchanger 2. The low-temperature, low-pressure two-phase gas-liquid refrigerant, which has flowed into the heat source side heat exchanger 2, exchanges heat with air supplied from the air-sending device (not illustrated) to remove heat from the air, so that the quality of the refrigerant gradually increases. The refrigerant flows out of the heat source side heat exchanger 2, passes through the flow switching device 3, and flows into the accumulator 4. The refrigerant, which has flowed into the accumulator 4, is separated into a liquid refrigerant and a gas refrigerant. The gas refrigerant is again sucked into the compressor 1.

### [Electrical Configuration of Air-conditioning Apparatus 100]

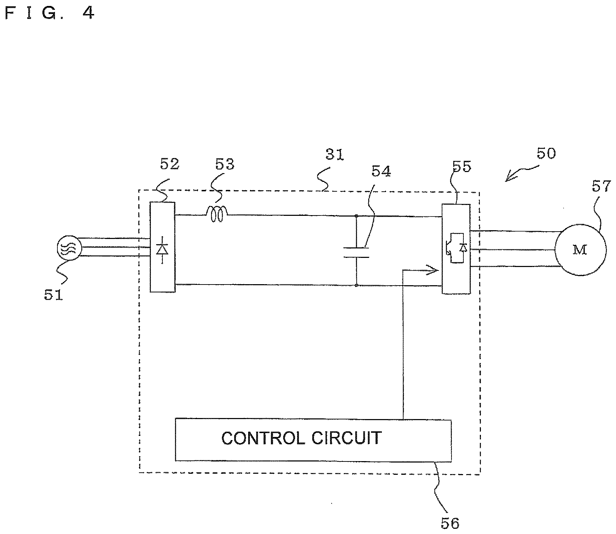

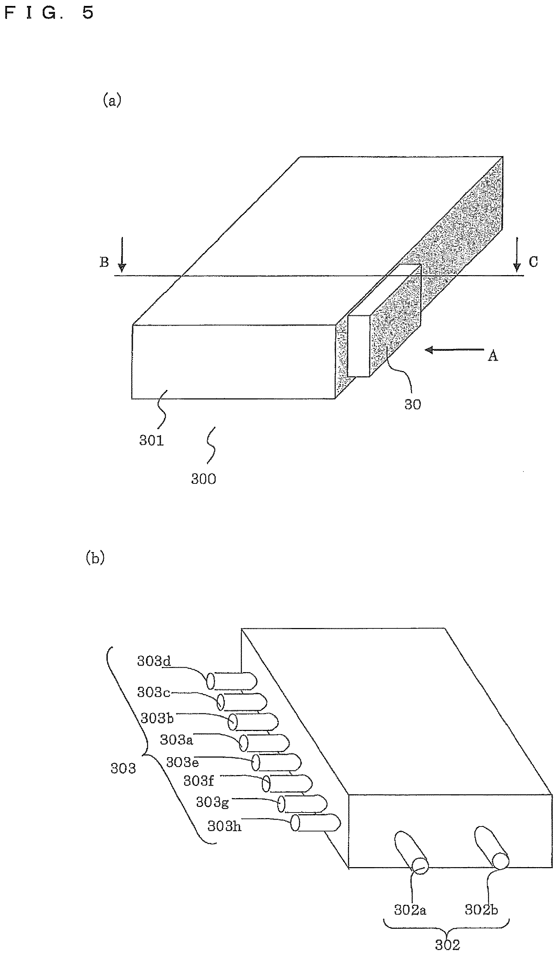

Fig. 4 is a circuit diagram schematically illustrating an electrical connection state in the air-conditioning apparatus 100. An electrical configuration of the air-conditioning apparatus 100 will be described with reference to Fig. 4. An installation position of the electric component box 30 will be described in detail later with reference to Figs. 5 to 7.

The control unit 50 includes a rectifier 52 to convert an alternating current (AC) voltage from a three-phase AC power supply 51 to a direct current (DC) voltage, a reactor 53 for power-factor improvement, a smoothing capacitor 54, an inverter main circuit 55, a control circuit 56 to control the inverter main circuit 55, and an inverter circuit board 31 on which these components are mounted. The control unit 50 is connected to a motor 57 of the compressor 1.

The inverter main circuit 55 is configured to convert DC power smoothed by the smoothing capacitor 54 to AC power and includes a plurality of switching elements including a silicon (Si) semiconductor or a wide band gap semiconductor. The term "wide band gap semiconductor" is a generic name for semiconductor devices with band gaps greater than that of a silicon (Si) device. Examples of the wide band gap semiconductor include a silicon carbide (SiC) device, a gallium nitride (GaN) device, a diamond device, and the like. Each switching element of the inverter main circuit 55 performs a switching operation in response to an operation signal (PWM signal, gate signal) transmitted from the control circuit 56.

The control circuit 56 includes a microcomputer or the like and actually controls driving of the various actuators on the basis of detection information from the various detection means (not illustrated), for example, the temperature sensors and the pressure sensors, and an instruction from the remote control in order to perform the heating operation or the cooling operation. In Fig. 4, only the motor 57 of the compressor 1 is illustrated for the sake of convenience. Explanation about, for example, motors of the indoor air-sending devices and the outdoor air-sending device is omitted. In addition to the switching elements, a diode element can include a wide band gap semiconductor.

### [Installation Position of Electric component Box 30]

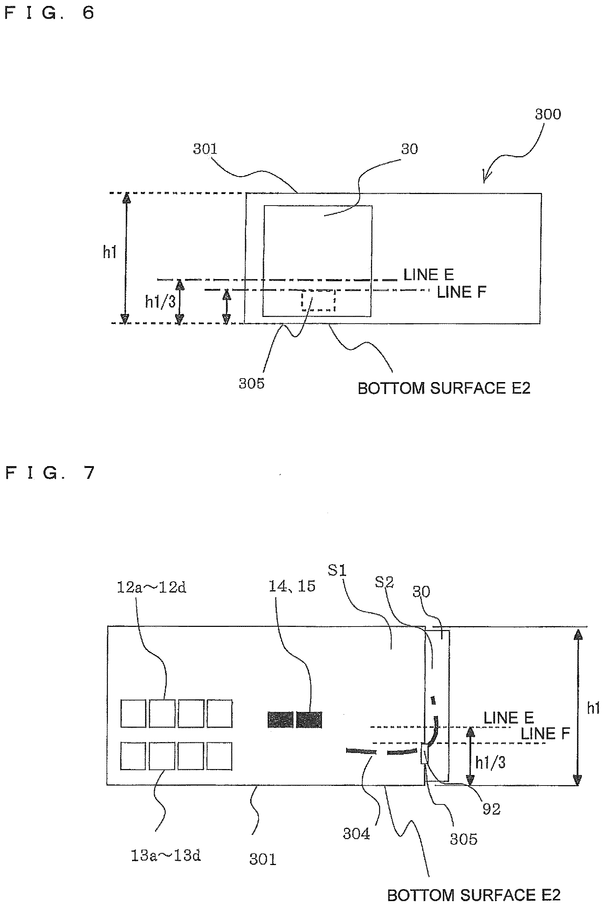

Fig. 5 includes schematic perspective views each illustrating an appearance of the distribution controller 300 according to Embodiment. Fig. 6 is a side view illustrating a side surface of the distribution controller 300 of Fig. 5 on which the electric component box 30 is disposed. Fig. 7 is a cross-sectional view of the distribution controller 300 taken along line B-C in Fig. 5(a). The distribution controller 300 will be described in detail with reference to Figs. 5 to 7. Fig. 5(a) is a schematic perspective view illustrating the side surface to which the electric component box 30 is attached. The pipe connection ports 302 and 303 are not seen in Fig. 5(a). Fig. 5(b) is a schematic perspective view illustrating surfaces in which the pipe connection ports 302 and 303 are arranged. The electric component box 30 is not seen in Fig. 5(b).

As described above, the distribution controller 300 is included in the air-conditioning apparatus 100 and is connected to the outdoor unit 10 and the indoor units 20 through the refrigerant pipes. The distribution controller 300 supplies cooling energy or heating energy supplied from the outdoor unit 10 to the indoor units 20 in order to cool or heat the air-conditioned spaces. In the following description, the surface of the distribution controller 300 viewed from arrow A in Fig. 5(a) will be referred to as a front surface thereof.

As illustrated in Figs. 5 to 7, the distribution controller 300 includes the switching valves 12a to 12d and 13a to 13d, the subcooling heat exchangers 16 and 17, and the expansion devices 14 and 15 which have been described above, and further includes the following components: a shell panel 301 which constitutes a shell of the distribution controller 300 and is substantially rectangular-parallelepiped-shaped, a rubber bushing 92 attached to the shell panel 301 (housing), and the electric component box 30 which is attached to the shell panel 301 and accommodates the relays 33 and the like. In the following description, a space inside the shell panel 301 of the distribution controller 300 will be referred to as a space S1 and a space inside the electric component box 30 will be referred to as a space S2.

The shell panel 301 constitutes the shell of the distribution controller 300 and is substantially rectangular-parallelepiped-shaped. The electric component box 30 which accommodates the control unit 50 and the like is attached to the front surface of the shell panel 301 such that the electric component box 30 is openable by a hinge, for example. In addition, a communicating portion 305 that communicates between the spaces S1 and S2 is disposed in the front surface of the shell panel 301 so as to correspond to the electric component box 30. The communicating portion 305 is provided with the rubber bushing 92.

As illustrated in Fig. 5(b), the pipe connection ports 303 to connect the indoor units 20 to the distribution controller 300 are arranged in a surface opposite the front surface of the shell panel 301. In addition, the pipe connection ports 302 to connect the outdoor unit 10 to the distribution controller 300 are arranged in a surface to the right of the front surface of the shell panel 301 as illustrated in Fig. 5(b).

The rubber bushing 92 is configured to minimize intrusion of the refrigerant from the space S1 to the space S2 while ensuring a space through which wiring passes. The rubber bushing 92 is attached to the communicating portion 305, serving as an opening of the shell panel 301, through which the space S1 communicates with the space S2. If the flammable refrigerant leaks, the intrusion of the refrigerant from the space S1 inside the shell panel 301 into the space S2 inside the electric component box 30 can be significantly reduced by the rubber bushing 92.

The electric component box 30 accommodates the control unit 50, serving as an electric component. The control unit 50 disposed in the electric component box 30 is connected through wiring 304 to, for example, the expansion devices 14 and 15 and the relays 33 used for opening and closing of the switching valves 12 and 13. More specifically, the wiring connected to the expansion devices 14 and 15 and the switching valves 12 and 13 extends through the space S1, the rubber bushing 92, and the space S2 inside the electric component box 30 and is connected to the control unit 50.

Table 1 illustrates gas densities of promising next-generation refrigerants at 25 degrees C and an atmospheric pressure (101.3 kPa abs). Physical properties are obtained from REFPROP Version 9.0, available from the National Institute of Standards and Technology (NIST).

### [Table 1]

**Table 1 List of Gas Densities of Refrigerants**

| Refrigerant | Density [kg/m³] |
|---|---|
| R32 | 2.1526 |
| HFO1234yf | 4.7654 |
| HFO1234ze(E) | 4.7738 |

Table 1 demonstrates that the gas densities of the promising next-generation refrigerants are greater than the density of air, 1.2 [kg/m³]. As illustrated in Table 1, the promising next-generation refrigerants are R32, HFO1234yf, and HFO1234ze(E). This fact means that the refrigerants in Table 1 are heavier than the air and tend to stagnate on the bottoms of the indoor units 20 when leaking from the outdoor unit 10.

It is known that, for example, if any of the refrigerants in Table 1 leaks in a distribution controller that is currently in widespread use, the leaked refrigerant will accumulate to a level of approximately 10 cm from a bottom surface of the distribution controller. Accordingly, a communicating portion through which wiring extends may be formed at a level higher than 10 cm from the bottom surface of the distribution controller and a rubber bushing may be attached to the communicating portion.

Assuming that the communicating portion is formed at a level higher than 10 cm from the bottom surface, however, if the refrigerant rises due to any cause and flows into an electric component box via the communicating portion, the refrigerant may accumulate in the electric component box because the next-generation refrigerant is heavier than the air. Unfortunately, the concentration of the refrigerant may exceed its lower explosive limit.

In the distribution controller 300, therefore, the communicating portion 305 is disposed such that the top of the communicating portion 305 is located at a level lower than 1/3 (indicated by line E in Fig. 6) of the height, indicated at h1, of the shell panel 301 from a bottom surface E2 of the shell panel 301. The level of the top of the communicating portion 305 in this case corresponds to line F in Figs. 6 and 7. Consequently, if the refrigerant leaks, the refrigerant would not accumulate in the electric component box 30 and the electric component box 30 would not be exposed to an area where the concentration of the refrigerant exceeds its lower explosive limit.

### [Arrangement of Electric components in Electric component Box 30]

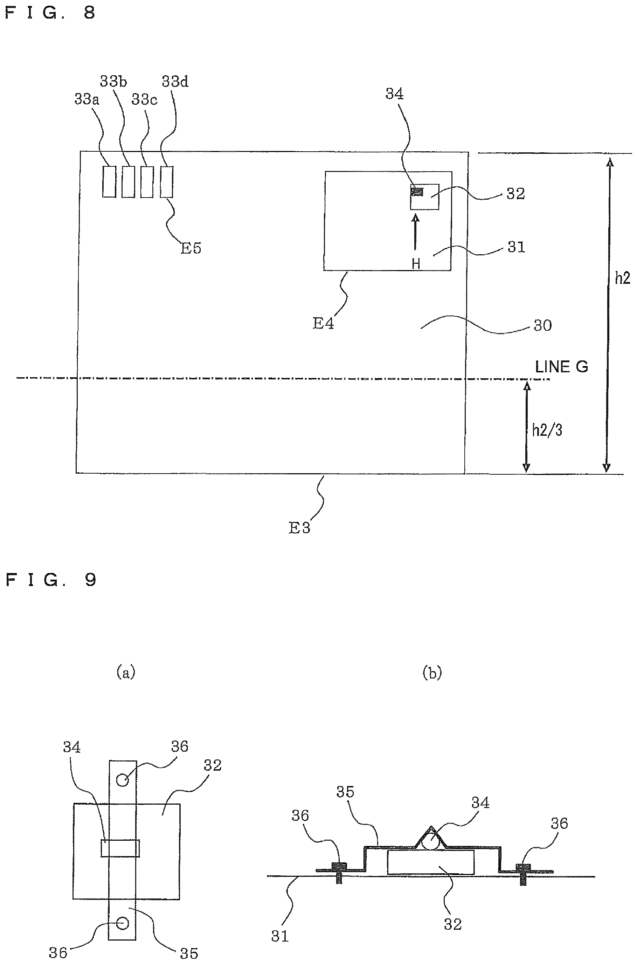

Fig. 8 is a schematic diagram schematically illustrating arrangement of the electric components in the electric component box 30. The arrangement of the electric components in the electric component box 30 will be described with reference to Fig. 8. As described above, the electric component box 30 accommodates the control unit 50, serving as an electric component. The control unit 50 includes the inverter circuit board 31.

The electric component box 30 further accommodates electric components, for example, the relays 33a to 33d to turn on or off solenoid valves (not illustrated in Figs. 1 to 3) and the switching valves 12 and 13 in addition to the control unit 50. The control unit 50 controls the motor of the compressor 1 such that the rotation speed of the motor varies in the range of several hertz to hundreds of hertz.

At least one of electronic components included in the inverter circuit board 31 includes the wide band gap semiconductor as described above. In Fig. 8, the wide band gap semiconductor mounted on the inverter circuit board 31 is illustrated as a wide band gap semiconductor 32 for the sake of convenience. As described above, examples of the wide band gap semiconductor 32 include a silicon carbide (SiC) device, a gallium nitride (GaN) device, and a diamond device.

The semiconductor device (e.g., the inverter main circuit 55 illustrated in Fig. 4), serving as the wide band gap semiconductor 32, is highly resistant to heat and can accordingly withstand high temperatures. Thus, a slit or hole that permits the air to pass therethrough in order to suppress an increase in temperature inside the electric component box 30 may be omitted, thus achieving a structure resistant to ambient air intrusion.

The electric component box 30 is formed of a noncombustible material, such as sheet metal, and is configured such that the right side of a cover of the electric component box 30 is detached from the front surface of the shell panel 301 with a screwdriver or the like in order to accept service, such as wiring connection and electric component replacement. Although the communicating portion 305 that communicates between the space S2 inside the electric component box 30 and the space S1 inside the shell panel 301 is disposed, the communicating portion 305 is sealed by the rubber bushing 92. In other words, the electric component box 30 is configured such that the ambient air hardly intrudes into the space S2 inside the electric component box 30.

The above-described structure of the electric component box 30 can significantly reduce the intrusion of the refrigerant into the electric component box 30 if the refrigerant leaks, thus further improves safety. In other words, the structure resistant to ambient air intrusion further strengthens a countermeasure against intrusion of the refrigerant. Although the electric component box 30 has such a structure resistant to ambient air intrusion, an increase in temperature inside the electric component box 30 can be suppressed only by heat radiation from the electric component box 30 to its surroundings because the wide band gap semiconductor 32 having high resistance to heat is included.

In other words, the distribution controller 300 has the structure resistant to ambient air intrusion because the communicating portion 305 is sealed by the rubber bushing 92. In addition, the communicating portion 305 is disposed at a level lower than 1/3 (indicated by line F in Fig. 6) of the height h1 of the shell panel 301 from the bottom surface E2 of the shell panel 301 as described above. Accordingly, if the refrigerant flows into the electric component box 30, the refrigerant can be prevented from accumulating in the box.

The wide band gap semiconductor 32, which has high resistance to heat and is operable under a high temperature condition, permits a fan-less structure or a radiating-fin-less structure (or a structure with a miniaturized radiating fin). Thus, the electric component box 30 is allowed to have a substantially enclosed structure. Furthermore, since a switching element or diode element including the wide band gap semiconductor 32 withstands a high voltage and has a high allowable current density, such a switching element can be reduced in size. Thus, a semiconductor module including these elements can also be reduced in size. Furthermore, since the wide band gap semiconductor 32 has low power loss, the switching elements can be increased in efficiency, so that the semiconductor module can also be increased in efficiency.

Furthermore, as illustrated in Fig. 8, the relays 33a to 33d that may be a source of ignition and the electric components including the wide band gap semiconductor 32 that may reach a high temperature are arranged as high as possible. In the electric component box 30, accordingly, the electric components are arranged such that bottom surfaces E4 and E5 of the electric components are located at a level higher than 1/3 (indicated by line G in Fig. 8) of the height, indicated at h2, of the electric component box 30 from a bottom surface E3 of the electric component box 30. Consequently, if the refrigerant leaks, the electric components would not be exposed to an area where the concentration of the refrigerant exceeds the lower explosive limit. This arrangement allows the refrigerant to accumulate in a lower portion of the electric component box 30 if the leaked refrigerant intrudes through a gap of the electric component box 30, resulting in further improved safety.

It is found that if any of the refrigerants illustrated in Table 1 intrudes into an electric component box which is currently in widespread use, the intruded refrigerant will accumulate to a level of tens of centimeters from a bottom surface of the electric component box. Accordingly, the electric components may be arranged at a level higher than tens of centimeters from the bottom surface of the electric component box. In the distribution controller 300, the electric components are arranged in consideration of the ease of maintenance and the ease of operation as well as the safety such that the bottom surfaces E4 and E5 of the electric components are located at a level higher than 1/3 of the height h2 of the electric component box 30 from the bottom surface E3 of the electric component box 30.

### [Suppression of Increase in Temperature of Wide Band Gap Semiconductor 32]

Fig. 9 includes schematic diagrams schematically illustrating an exemplary placement of the wide band gap semiconductor 32. Suppression of an increase in temperature of the wide band gap semiconductor 32 to further improve the safety will be described with reference to Fig. 9. Fig. 9(a) is a partially see-through view illustrating the wide band gap semiconductor 32 and temperature detection means 34 viewed from the front. Fig. 9(b) is a diagram illustrating the wide band gap semiconductor 32 and the temperature detection means 34 viewed in a direction H illustrated in Fig. 8.

Table 2 illustrates ignition temperatures of the promising next-generation refrigerants.

### [Table 2]

**Table 2 List of Ignition Temperatures of Refrigerants**

| Refrigerant | Ignition Temperature [degrees C] |
|---|---|
| R32 | 648 |
| HFO1234yf | 405 |
| HFO1234ze(E) | 288 to 293 |

The ignition temperature illustrated in Table 2 is the temperature at which the refrigerant spontaneously ignites. In other words, when the wide band gap semiconductor 32 reaches the temperature illustrated in Table 2 or higher and the concentration of the refrigerant is greater than or equal to the lower explosive limit, the refrigerant can ignite. This demonstrates that a surface temperature of the wide band gap semiconductor 32 which may reach the highest temperature among the electric components in the electric component box 30 should be lower than the ignition temperature of the refrigerant used in the air-conditioning apparatus 100.

The temperature detection means 34 may be in contact with the surface of the wide band gap semiconductor 32 to appropriately detect the temperature of the wide band gap semiconductor 32. If the temperature of the wide band gap semiconductor 32 can be appropriately detected, an increase in temperature of the wide band gap semiconductor 32 can be efficiently suppressed. For example, the temperature detection means 34 can be in contact with the wide band gap semiconductor 32 by bonding the temperature detection means 34 to the surface of the wide band gap semiconductor 32 with a heat conductive adhesive. Alternatively, as illustrated in Fig. 9, the temperature detection means 34 may be in contact with the wide band gap semiconductor 32 with an attachment 35 and fasteners 36.

For the temperature detection means 34, a thermistor may be used. Alternatively, another temperature sensor, such as a thermocouple, may be used as the temperature detection means 34. The attachment 35 and the fasteners 36 are not limited in material, shape, size, number, and the like to those illustrated in Fig. 9 and may have any structure that enables the wide band gap semiconductor 32 and the temperature detection means 34 to be in contact with each other.

An operation of suppressing an increase in temperature of the wide band gap semiconductor 32 will now be described. When the temperature detection means 34 detects that the surface temperature of the wide band gap semiconductor 32 is at a predetermined temperature, the control unit 50 stops the operation of the air-conditioning apparatus 100. Alternatively, the control unit 50 reduces the rotation speed of the compressor 1. This control can suppress further heat generation of the wide band gap semiconductor 32, thus suppressing an increase in temperature of the wide band gap semiconductor 32.

If the above-described control fails to allow the surface temperature of the wide band gap semiconductor 32 to fall below the predetermined temperature, the control unit 50 completely stops the air-conditioning apparatus 100. Specifically, the control unit 50 performs control so as to suppress an increase in temperature of the wide band gap semiconductor 32 when the temperature of the wide band gap semiconductor 32 reaches the predetermined temperature (suppression control start temperature) used as a condition to start the control to suppress an increase in temperature of the wide band gap semiconductor 32. Performing this control can further reduce risks upon leakage of the refrigerant. Thus, the air-conditioning apparatus 100 is allowed to have significantly improved safety. Notification about completion of the control may be provided to the outside of the air-conditioning apparatus 100 by audio or visual means.

The predetermined temperature (suppression control start temperature) will now be described. The suppression control start temperature, that is, the predetermined temperature used as a condition to start the control to suppress an increase in temperature of the wide band gap semiconductor 32 has to be determined in consideration of variations in thermistor, variations in attachment between the thermistor and the wide band gap semiconductor, and the like. Furthermore, the ignition temperature of the refrigerant varies depending on humidity and temperature around the refrigerant. Specifically, assuming that the predetermined temperature is set to the same value as the ignition temperature, the control to suppress an increase in temperature of the wide band gap semiconductor 32 may be performed or may not be performed depending on conditions.

Accordingly, the predetermined temperature has to be set so as to include a considerable amount of margin. In view of this backdrop, the predetermined temperature in the air-conditioning apparatus 100 is set to "the ignition temperature of the refrigerant used - approximately 100 degrees C" in consideration of various environmental influences, deterioration with time, individual variations, and the like. Although the predetermined temperature may be changed depending on the refrigerant used, it is preferred that the predetermined temperature be set on the basis of HFO1234ze(E) having the lowest ignition temperature among the refrigerants illustrated in Table 2 in consideration of versatility. In this case, the predetermined temperature is approximately 188 degrees C.

The wide band gap semiconductor 32 is highly resistant to heat but is more likely to be damaged at or above 200 degrees C. To secure the safety and the reliability of the wide band gap semiconductor 32, the predetermined temperature is set to approximately 150 degrees C. Consequently, the safety can be ensured and the reliability of the wide band gap semiconductor 32 can also be achieved, thus significantly increasing the reliability of the air-conditioning apparatus 100.

### [Advantages of Air-conditioning Apparatus 100 according to Embodiment]

Since the distribution controller 300 of the air-conditioning apparatus 100 according to Embodiment is configured such that the top of the communicating portion 305 is located at a level lower than 1/3 (indicated by line F in Fig. 6) of the height h1 of the shell panel 301 from the bottom surface E2 of the shell panel 301, the refrigerant will not accumulate in the electric component box 30 if the refrigerant leaks. Advantageously, the electric component box 30 will not be exposed to an area where the concentration of the refrigerant exceeds its lower explosive limit.

In the distribution controller 300 of the air-conditioning apparatus 100 according to Embodiment, the electric components are arranged such that the bottom surfaces E4 and E5 of the electric components are located at a level higher than 1/3 of the height h2 of the electric component box 30 from the bottom surface E3 of the electric component box 30. Consequently, even if the refrigerant intrudes into the space S2 inside the electric component box 30 through a gap of the electric component box 30, the refrigerant will accumulate in the lower portion of the electric component box 30 and the electric components will not be exposed to the area where the concentration of the refrigerant exceeds the lower explosive limit. This results in further improved safety of the distribution controller 300.

The distribution controller 300 of the air-conditioning apparatus 100 according to Embodiment has the structure resistant to ambient air intrusion because the communicating portion 305 is sealed by the rubber bushing 92. If the refrigerant leaks, this structure can significantly reduce the intrusion of the refrigerant into the space S2 inside the electric component box 30 from the space S1 of the shell panel 301.

Since the inverter circuit board 31 in the distribution controller 300 of the air-conditioning apparatus 100 according to Embodiment includes the wide band gap semiconductor 32, high resistance to heat is achieved, thus achieving high reliability.

Since the inverter circuit board 31 in the distribution controller 300 of the air-conditioning apparatus 100 according to Embodiment includes the wide band gap semiconductor 32, the fan-less structure or the radiating-fin-less structure (or structure with a miniaturized radiating fin) can be used. Thus, the electric component box 30 is allowed to have a substantially enclosed structure.

Since the air-conditioning apparatus 100 according to Embodiment includes the distribution controller 300, the air-conditioning apparatus 100 ensures significantly increased safety and reliability as in the case of the distribution controller 300. Reference Signs List

1 compressor 2 heat source side heat exchanger 3 flow switching device 4a, 4b refrigerant pipe 4 accumulator 5a to 5d check valve 10 outdoor unit 11 gas-liquid separator 12a to 12d switching valve 13a to 13d switching valve 14 expansion device 15 expansion device 16 subcooling heat exchanger 17 subcooling heat exchanger 20 indoor unit 20a to 20d indoor unit 21 expansion device 21 a to 21 d expansion device 22 use side heat exchanger 22a to 22d use side heat exchanger 30 electric component box 31 inverter circuit board 32 wide band gap semiconductor 33 relay 33a to 33d relay 34 temperature detection means 35 attachment 36 fastener 50 control unit 51 three-phase AC power supply 52 rectifier 53 reactor 54 smoothing capacitor 55 inverter main circuit 56 control circuit 57 motor 92 rubber bushing 100 air-conditioning apparatus 300 distribution controller 301 shell panel 302 pipe connection port 302a, 302b pipe connection port 303 pipe connection port 303a to 303h pipe connection port 304 wiring 305 communicating portion S1 space S2 space

## Claims

1. A distribution controller (300) included in an air-conditioning apparatus (100) that uses a flammable refrigerant, the distribution controller (300) comprising:
a housing (301);
a switching valve (12a to 12d, 13a to 13d) disposed inside the housing (301) and configured to switch between a refrigerant passing state and a refrigerant blocking state;
a control unit (50) configured to control at least the switching valve (12a to 12d, 13a to 13d); and
an electric component box (30) attached to the housing (301) and configured to accommodate at least the control unit (50) and an electric component used to control a driving component included in the air-conditioning apparatus (100),
wherein the housing (301) has a communicating portion (305) that communicates between the housing (301) and the electric component box (30) and the communicating portion (305) is disposed at a level lower than 1/3 of a height of the housing (301) from a bottom surface of the housing (301), and **characterized in that** a bottom surface of the control unit (50) and a bottom surface of the electric component are arranged at a level higher than 1/3 of a height of the electric component box (30) from a bottom surface of the electric component box (30).

2. The distribution controller (300) of claim 1,
wherein the communicating portion (305) is provided with a rubber bushing (92) that seals inside of the electric component box (30) from inside of the housing (301), and
wherein the control unit (50) is connected to the switching valve (12a to 12d, 13a to 13d) via the rubber bushing (92).

3. The distribution controller (300) of claim 1 or 2, wherein at least one of devices included in the control unit (50) includes a wide band gap semiconductor (32).

4. The distribution controller (300) of claim 3, further comprising
temperature detection means (34) configured to detect a temperature of the wide band gap semiconductor (32),
wherein the temperature detection means (34) is disposed in contact with a surface of the wide band gap semiconductor (32).

5. The distribution controller (300) of claim 4, wherein when the temperature detection means (34) detects a predetermined temperature, the control unit (50) stops an operation of the air-conditioning apparatus (100).

6. The distribution controller (300) of claim 5, wherein the predetermined temperature is higher than or equal to 150 degrees C.

7. The distribution controller (300) of any one of claims 3 to 6, wherein the wide band gap semiconductor (32) is at least one of a silicon carbide device, a gallium nitride device, and a diamond device.

8. The distribution controller (300) of any one of claims 1 to 7, wherein R32 is used as the flammable refrigerant.

9. The distribution controller (300) of any one of claims 1 to 7, wherein HFO1234yf is used as the flammable refrigerant.

10. The distribution controller (300) of any one of claims 1 to 7, wherein HFO1234ze(E) is used as the flammable refrigerant.

11. The distribution controller (300) of any one of claims 1 to 7, wherein a refrigerant mixture of R32 and HFO1234yf is used as the flammable refrigerant.

12. The distribution controller (300) of any one of claims 1 to 7, wherein a refrigerant mixture of R32 and HFO1234ze(E) is used as the flammable refrigerant.

13. An air-conditioning apparatus (100) comprising:
the distribution controller (300) of any one of claims 1 to 12;
an indoor unit (20) connected to the distribution controller (300) through a refrigerant pipe, the indoor unit (20) being provided with a use side heat exchanger (22) and an expansion device (21); and
an outdoor unit (10) connected to the distribution controller (300) through the refrigerant pipe, the outdoor unit (10) being provided with a compressor (1) and a heat source side heat exchanger (2).

14. The air-conditioning apparatus (100) of claim 13 as dependent on claim 4, wherein when the temperature detection means (34) detects a predetermined temperature, the control unit (50) reduces a rotation speed of the compressor (1) to a value lower than a current rotation speed.

15. The air-conditioning apparatus (100) of claim 14, wherein if the temperature of the wide band gap semiconductor (32) is not below the predetermined temperature after a lapse of a predetermined period of time, the control unit (50) stops an operation of the air-conditioning apparatus (100).

## Patentansprüche

1. Verteilungssteuereinheit (300), die in einer Klimatisierungsvorrichtung (100) enthalten ist, die mit einem entflammbaren Kältemittel arbeitet, wobei die Verteilungssteuereinheit (300) Folgendes umfasst:
ein Gehäuse (301);
ein Schaltventil (12a bis 12d, 13a bis 13d), das im Inneren des Gehäuses (301) angeordnet ist und dafür konfiguriert ist, zwischen einem Kältemitteldurchlasszustand und einem Kältemittelsperrzustand umzuschalten;
eine Steuereinheit (50), die dafür konfiguriert ist, zumindest das Schaltventil (12a bis 12d, 13a bis 13d) zu steuern; und
ein Elektrikkomponentenkasten (30), der an dem Gehäuse (301) angebracht und dafür konfiguriert ist, mindestens die Steuereinheit (50) und eine elektrische Komponente aufzunehmen, die zum Steuern einer Antriebskomponente verwendet wird, die in der Klimatisierungsvorrichtung (100) enthalten ist,
wobei das Gehäuse (301) einen Kommunikationsabschnitt (305) hat, der zwischen dem Gehäuse (301) und dem Elektrikkomponentenkasten (30) kommuniziert, und der Kommunikationsabschnitt (305) auf einem Niveau angeordnet ist, tiefer als ein Drittel einer Höhe des Gehäuses (301) von einer Unterseite des Gehäuses (301) ist, und
**dadurch gekennzeichnet, dass**
eine Unterseite der Steuereinheit (50) und eine Unterseite der elektrischen Komponente auf einem Niveau angeordnet sind, das höher als ein Drittel einer Höhe des Elektrikkomponentenkastens (30) von einer Unterseite des Elektrikkomponentenkastens (30) liegt.

2. Verteilungssteuereinheit (300) nach Anspruch 1, wobei der Kommunikationsabschnitt (305) mit einer Gummibuchse (92) versehen ist, die das Innere des Elektrikkomponentenkastens (30) vom Inneren des Gehäuses (301) abdichtet, und
wobei die Steuereinheit (50) mit dem Schaltventil (12a bis 12d, 13a bis 13d) über die Gummibuchse (92) verbunden ist.

3. Verteilungssteuereinheit (300) nach Anspruch 1 oder 2, wobei mindestens eines von Geräten, die in der Steuereinheit (50) enthalten sind, einen Halbleiter mit breitem Bandabstand (32) enthält.

4. Verteilungssteuereinheit (300) nach Anspruch 3, die des Weiteren ein Temperaturdetektionsmittel (34) umfasst, das dafür konfiguriert ist, eine Temperatur des Halbleiters mit breitem Bandabstand (32) zu detektieren,
wobei das Temperaturdetektionsmittel (34) in Kontakt mit einer Oberfläche des Halbleiters mit breitem Bandabstand (32) angeordnet ist.

5. Verteilungssteuereinheit (300) nach Anspruch 4, wobei, wenn das Temperaturdetektionsmittel (34) eine zuvor festgelegte Temperatur detektiert, die Steuereinheit (50) einen Betrieb der Klimatisierungsvorrichtung (100) stoppt.

6. Verteilungssteuereinheit (300) nach Anspruch 5, wobei die zuvor festgelegte Temperatur 150°C oder mehr beträgt.

7. Verteilungssteuereinheit (300) nach einem der Ansprüche 3 bis 6, wobei der Halbleiter mit breitem Bandabstand (32) mindestens eines von einem Siliziumcarbid-Bauelement, einem Galliumnitrid-Bauelement und einem Diamant-Bauelement ist.

8. Verteilungssteuereinheit (300) nach einem der Ansprüche 1 bis 7, wobei R32 als das entflammbare Kältemittel verwendet wird.

9. Verteilungssteuereinheit (300) nach einem der Ansprüche 1 bis 7, wobei HFO1234yf als das entflammbare Kältemittel verwendet wird.

10. Verteilungssteuereinheit (300) nach einem der Ansprüche 1 bis 7, wobei HF01234ze(E) als das entflammbare Kältemittel verwendet wird.

11. Verteilungssteuereinheit (300) nach einem der Ansprüche 1 bis 7, wobei ein Kältemittelgemisch aus R32 und HFO1234yf als das entflammbare Kältemittel verwendet wird.

12. Verteilungssteuereinheit (300) nach einem der Ansprüche 1 bis 7, wobei ein Kältemittelgemisch aus R32 und HFO1234ze(E) als das entflammbare Kältemittel verwendet wird.

13. Klimatisierungsvorrichtung (100), die Folgendes umfasst:
die Verteilungssteuereinheit (300) nach einem der Ansprüche 1 bis 12;
eine Innenraumeinheit (20), die mit der Verteilungssteuereinheit (300) durch ein Kältemittelrohr verbunden ist, wobei die Inneneinheit (20) mit einem nutzungsseitigen Wärmetauscher (22) und einer Ausdehnungsvorrichtung (21) versehen ist; und
eine Außeneinheit (10), die mit der Verteilungssteuereinheit (300) durch das Kältemittelrohr verbunden ist, wobei die Außeneinheit (10) mit einem Verdichter (1) und einem wärmequellenseitigen Wärmetauscher (2) versehen ist.

14. Klimatisierungsvorrichtung (100) nach Anspruch 13 als abhängig von Anspruch 4, wobei, wenn das Temperaturdetektionsmittel (34) eine zuvor festgelegte Temperatur detektiert, die Steuereinheit (50) eine Drehzahl des Verdichters (1) auf einen Wert verringert, der niedriger ist als eine momentane Drehzahl.

15. Klimatisierungsvorrichtung (100) nach Anspruch 14, wobei, wenn die Temperatur des Halbleiters mit breitem Bandabstand (32) nicht unter der zuvor festgelegten Temperatur liegt, nachdem ein zuvor festgelegter Zeitraum verstrichen ist, die Steuereinheit (50) einen Betrieb der Klimatisierungsvorrichtung (100) stoppt.

## Revendications

1. Contrôleur de distribution (300) inclus dans un appareil de climatisation (100) qui utilise un réfrigérant inflammable, le contrôleur de distribution (300) comprenant :
une enceinte (301) ;
une soupape de commutation (12a à 12d, 13a à 13d) disposée à l'intérieur de l'enceinte (301) et configurée pour basculer entre un état de circulation du réfrigérant et un état de blocage du réfrigérant ;
une unité de commande (50) configurée pour contrôler au moins la soupape de commutation (12a à 12d, 13a à 13d) ; et
un boîtier de composants électriques (30) relié à l'enceinte (301) et configuré pour contenir au moins l'unité de commande (50) et un composant électrique utilisé pour contrôler un composant d'entraînement inclus dans l'appareil de climatisation (100),
dans lequel l'enceinte (301) possède une partie de communication (305) qui communique entre l'enceinte (301) et le boîtier de composants électriques (30), et la partie de communication (305) est disposée à un niveau inférieur à 1/3 de la hauteur de l'enceinte (301) depuis une surface inférieure de l'enceinte (301), et
**caractérisé en ce que**
une surface inférieure de l'unité de commande (50) et une surface inférieure du composant électrique sont disposées à un niveau supérieur à 1/3 d'une hauteur du boîtier de composants électriques (30) depuis une surface inférieure du boîtier de composants électriques (30).

2. Contrôleur de distribution (300) selon la revendication 1,
dans lequel la partie de communication (305) est munie d'un manchon en caoutchouc (92) qui ferme l'intérieur du boîtier de composants électriques (30) depuis l'intérieur de l'enceinte (301), et
dans lequel l'unité de commande (50) est reliée à la soupape de commutation (12a à 12d, 13a à 13d) par le biais du manchon en caoutchouc (92).

3. Contrôleur de distribution (300) selon la revendication 1 ou 2, dans lequel au moins l'un des dispositifs inclus dans l'unité de commande (50) comprend un semi-conducteur à large bande (32).

4. Contrôleur de distribution (300) selon la revendication 3, comprenant en outre
un moyen de détection de la température (34) configuré pour détecter une température du semi-conducteur à large bande (32),
dans lequel le moyen de détection de la température (34) est disposé en contact avec une surface du semi-conducteur à large bande (32).

5. Contrôleur de distribution (300) selon la revendication 4, dans lequel, lorsque le moyen de détection de la température (34) détecte une température prédéterminée, l'unité de commande (50) arrête l'appareil de climatisation (100).

6. Contrôleur de distribution (300) selon la revendication 5, dans lequel la température prédéterminée est supérieure ou égale à 150 degrés Celsius.

7. Contrôleur de distribution (300) selon l'une quelconque des revendications 3 à 6, dans lequel le semi-conducteur à large bande (32) est au moins l'un d'un dispositif en carbure de silicium, d'un dispositif en nitrure de gallium, et d'un dispositif en diamant.

8. Contrôleur de distribution (300) selon l'une quelconque des revendications 1 à 7, dans lequel du R32 est utilisé comme réfrigérant inflammable.

9. Contrôleur de distribution (300) selon l'une quelconque des revendications 1 à 7, dans lequel du HFO1234yf est utilisé comme réfrigérant inflammable.

10. Contrôleur de distribution (300) selon l'une quelconque des revendications 1 à 7, dans lequel du HFO1234ze(E) est utilisé comme réfrigérant inflammable.

11. Contrôleur de distribution (300) selon l'une quelconque des revendications 1 à 7, dans lequel un mélange réfrigérant de R32 et de HFO1234yf est utilisé comme réfrigérant inflammable.

12. Contrôleur de distribution (300) selon l'une quelconque des revendications 1 à 7, dans lequel un mélange réfrigérant de R32 et de HFO1234ze(E) est utilisé comme réfrigérant inflammable.

13. Appareil de climatisation (100) comprenant :
le contrôleur de distribution (300) selon l'une quelconque des revendications 1 à 12 ;
une unité d'intérieur (20) reliée au contrôleur de distribution (300) par le biais d'un tuyau de réfrigérant, l'unité d'intérieur (20) étant munie d'un échangeur thermique côté utilisateur (22) et d'un dispositif de dilatation (21) ; et
une unité d'extérieur (10) reliée au contrôleur de distribution (300) par le biais du tuyau de réfrigérant, l'unité d'extérieur (10) étant munie d'un compresseur (1) et d'un échangeur thermique côté source de chaleur (2).

14. Appareil de climatisation (100) selon la revendication 13 qui dépend de la revendication 4, dans lequel, lorsque le moyen de détection de la température (34) détecte une température prédéterminée, l'unité de commande (50) réduit une vitesse de rotation du compresseur (1) jusqu'à une valeur inférieure à une vitesse de rotation actuelle.

15. Appareil de climatisation (100) selon la revendication 14, dans lequel, si la température du semi-conducteur à large bande (32) n'est pas inférieure à la température prédéterminée au bout d'une certaine durée, l'unité de commande (50) arrête l'appareil de climatisation (100).
